# EUROPEAN PATENT APPLICATION

(11) **EP 4 733 256 A1**
(43) Date of publication of application: **29.04.2026**
(21) Application number: 24825898.0
(22) Date of filing: 18.06.2024
(51) Int. Cl.: C01B 33/16

(54) **AEROGEL AND METHOD FOR PRODUCING SAME**

(30) Priority: 22.06.2023 JP 2023102163
(71) Applicant: Tiem Factory Inc., Ibaraki 311-3108 (JP)
(72) Inventor: KAWASE, Noboru, Higashiibaraki-gun, Ibaraki 311-3108 (JP); UEGAKI, Azusa, Higashiibaraki-gun, Ibaraki 311-3108 (JP)
(74) Representative: Maiwald GmbH
(86) International application number: PCT/JP2024/022055
(87) International publication number: WO 2024/262497

(57) **Abstract**

In particular, by optimizing the parameters of total light transmittance during irradiation with visible light, the present invention provides: an aerogel that is in a sound state free of defects such as cracks and can be produced with a high yield even when having a relatively large area (specifically, a square surface region of 300 mm on each side); and a method for producing same. The aerogel has a pore structure formed of a network-like continuous fibrous skeleton and a plurality of pores defined by the skeleton, and contains Si. The aerogel has at least a surface having a size including a square surface region of 300 mm on each side. The standard deviation of total light transmittance when irradiated with visible light having a wavelength of 550 nm is 0.60% or less in terms of a 10 mm thickness in the surface region.

## Description

### TECHNICAL FIELD

The present invention relates to an aerogel and a method for producing the aerogel.

### BACKGROUND ART

An aerogel is a material having a uniform mesoporous structure, a high porosity (typically 90% or more), a low bulk density (0.004 to 0.500 g/cm³), and extremely low thermal conductivity (20 mW/mK or less), and is typically produced by a sol-gel method. Among these, a silica aerogel, an aerogel containing Si, has high visible light transparency in addition to a high thermal insulation property obtained by low thermal conductivity, and is expected to be applied as a transparent thermal insulating material applicable to housing windows (typically, visible light transmittance of about 60% in multilayer windows with high thermal insulation), displays, etc.

The silica aerogel is produced by hydrolyzing a silane compound monomer solution containing as a solvent, e.g., water to produce a sol, subjecting the sol to a cross-linking reaction (condensation reaction) to form a gel (condensation compound), and then drying the gel. However, the silica aerogel is a material that is very brittle and difficult to handle during production due to its high porosity and tenuous structure caused by a microstructure composed of nanometer-order domains (typically 100 nm or less). In order to obtain a large-sized silica aerogel, a gel has to be dried by a supercritical drying method using a supercritical fluid at a high temperature and high pressure, which requires expensive equipment for its production.

Therefore, a technique has been proposed to add flexibility to a skeleton that makes up a pore structure, thereby avoiding breakage due to shrinkage deformation or recovery deformation during a drying step to enable drying at atmospheric pressure with a low production cost. For example, Patent Document 1 describes a method for obtaining a transparent silica aerogel by means of drying at atmospheric pressure by allowing a reaction to produce a sol and a reaction to gelate the sol to take place in one step to control a skeletal structure to be uniform, thereby suppressing visible light scattering. Non-patent Document 1 describes a method for obtaining a silica aerogel by means of drying at atmospheric pressure by organic-inorganic hybridization of a pore structure.

### Citation List

### Patent Documents

Patent Document 1: Japanese Patent No. 5250900

### Non-Patent Documents

Non-Patent Document 1: K. Kanamori, M. Aizawa, K. Nakanishi, T. Hanada, Adv. Mater., 19, 1589-1593 (2007)

### DISCLOSURE OF THE INVENTION

### Problems to be Solved by the Invention

In the methods for producing a silica aerogel described in Patent Document 1 and Non-Patent Document 1, when the gel is dried, a volume of the gel shrinks to 20% or less by capillary force as an internal solvent present within the gel is discharged to the outside of the gel. However, after the internal solvent present within the gel is discharged to the outside of the gel to some extent, a gas enters pores of the gel to restore the volume of the gel to approximately the same volume as before the shrinkage.

Here, it was difficult to obtain an aerogel having a desired shape and size, because if a shape of the gel is no longer similar to a shape before shrinkage as the volume of the gel shrinks, a bending stress caused by deformation breaks the gel.

Furthermore, if the solvent remaining on a surface of and within the shrunken gel is unevenly discharged to the outside of the gel as the gel is dried, the gel breaks as the volume of the gel is restored since a bending stress caused by deformation is applied on the gel due to the solvent remaining in the gel. Therefore, it was difficult to obtain an aerogel having a desired shape and size.

In particular, when a large-size gel is shrunk in order to obtain a large-size silica aerogel of 300 mm square or more in size, not only does the bending stress caused by deformation increase with an increase in size, but also differences in polycondensation conditions at various positions easily arise due to the temperature distribution at the various positions after a sol is charged into a mold and mass transport caused by the temperature distribution, which tends to result in a non-uniform pore structure. As a result, it has been virtually impossible to produce a silica aerogel with a high yield by means of drying at atmospheric pressure since shrinkage of a volume as the gel is dried causes non-uniform pore sizes and, in turn, non-uniform capillary forces, thereby breaking the gel.

The present invention was made in view of such circumstances and, in particular, an object of the present invention is to provide an aerogel with a high yield and a sound state without a defect such as a crack, even if the aerogel has a relatively large area (specifically, a size of a surface including a surface region in a shape of a square having dimensions of at least 300 mm on each of four sides) by optimizing parameters of a total light transmittance when irradiated with visible light; and a method for producing the aerogel.

### Means for Solving the Problems

In order to achieve the object, the present invention has a summary as follows.

(1) An aerogel having a pore structure formed by a fibrous skeleton continuous in a mesh form and a plurality of pores defined by the skeleton, the aerogel containing Si, the aerogel having a surface comprising a surface region in a shape of a square having dimensions of at least 300 mm on each of four sides, and the aerogel having a standard deviation of a total light transmittance when the surface region is irradiated with visible light having a wavelength of 550 nm of 0.60% or more on a 10 mm thickness basis.
(2) The aerogel according to (1), in which the total light transmittance when irradiated with visible light is 50% or more on a 10 mm thickness basis.
(3) The aerogel according to (1) or (2), in which the aerogel is produced by drying at atmospheric pressure.
(4) A method for producing an aerogel, the method including: producing a sol by adding a silicon compound to an aqueous solution to thereby hydrolyze the silicon compound; gelling the sol by charging the sol into a casting pan and curing the sol through a cross-linking reaction in the casting pan to produce a gel; washing and replacing an internal solvent present on a surface of and within the gel with a first solvent having a low surface tension of 45 mN/m or less at 20°C by supplying the first solvent into the casting pan; and drying a second solvent having a specific gravity higher than that of the first solvent and being phase-separated from the first solvent in the casting pan to produce an aerogel containing Si, at least one of the gelling, the washing and replacing, or the drying being performed with oscillating the sol or the gel produced in the casting pan in a horizontal oscillation direction parallel to a bottom surface of the casting pan while the sol or the gel is held in the casting pan.
(5) The method for producing an aerogel according to (4), in which the gelling, the washing and replacing, and the drying are performed in a same reaction chamber.
(6) The method for producing an aerogel according to (4), in which at least the gelling and the drying among the gelling, the washing and replacing, and the drying are performed in separate reaction chambers.
(7) The method for producing an aerogel according to (5) or (6), in which the gelling is performed by adjusting a concentration of water vapor included in an atmosphere in the reaction chamber to a range of 60% or more and 100% or less of a saturated water vapor pressure.
(8) The method for producing an aerogel according to any one of (5) to (7), in which the drying is performed by adjusting a vapor concentration of a solvent included in the atmosphere in the reaction chamber to a range of 70% or more and less than 100%.
(9) The method for producing an aerogel according to any one of (5) to (8), in which the drying is performed under an atmosphere in the reaction chamber adjusted to atmospheric pressure.
(10) A device for producing an aerogel, the device including: a casting pan for curing and gelling a sol through a cross-linking reaction of the sol to produce a gel, the sol being produced by adding a silicon compound to an aqueous solution to thereby hydrolyze the silicon compound; a casting unit for charging the sol into the casting pan; a first solvent supplying unit for washing and replacing an internal solvent present on a surface of and within the gel with a first solvent having a low surface tension of 45 mN/m or less at 20°C by supplying the first solvent into the casting pan; a second solvent supplying unit for supplying, into the casting pan, a second solvent having a specific gravity higher than that of the first solvent and being phase-separated from the first solvent; a drying unit for drying the second solvent having been supplied to the casting pan to produce an aerogel containing Si; and an oscillating mechanism for oscillating the sol or the gel formed in the casting pan in a horizontal oscillation direction parallel to a bottom surface of the casting pan while the sol or the gel is held in the casting pan.

### Effects of the Invention

The present invention can provide, in particular, an aerogel with a high yield and a sound state without a defect such as a crack, even if the aerogel has a relatively large area (specifically, a surface region in the shape of a square having dimensions of 300 mm on each of four sides) by optimizing parameters of a total light transmittance when irradiated with visible light; and a method for producing the aerogel.

### BRIEF DESCRIPTION OF THE DRAWINGS

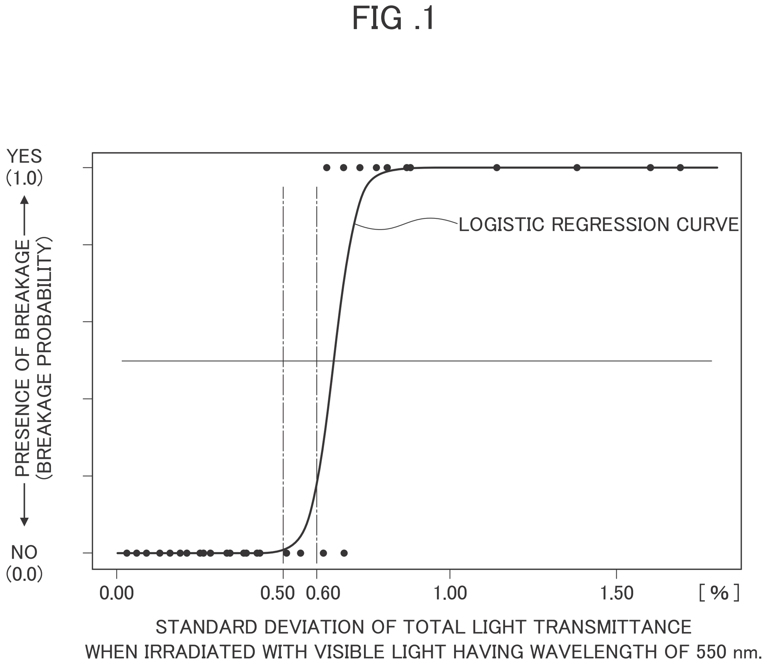

[FIG. 1] FIG. 1 is a graph showing a relationship between a standard deviation of a total light transmittance when irradiated with visible light having a wavelength of 550 nm and a breakage probability of the aerogel of the present invention in which the horizontal axis represents the standard deviation of a total light transmittance and the vertical axis represents the breakage probability of the aerogel;

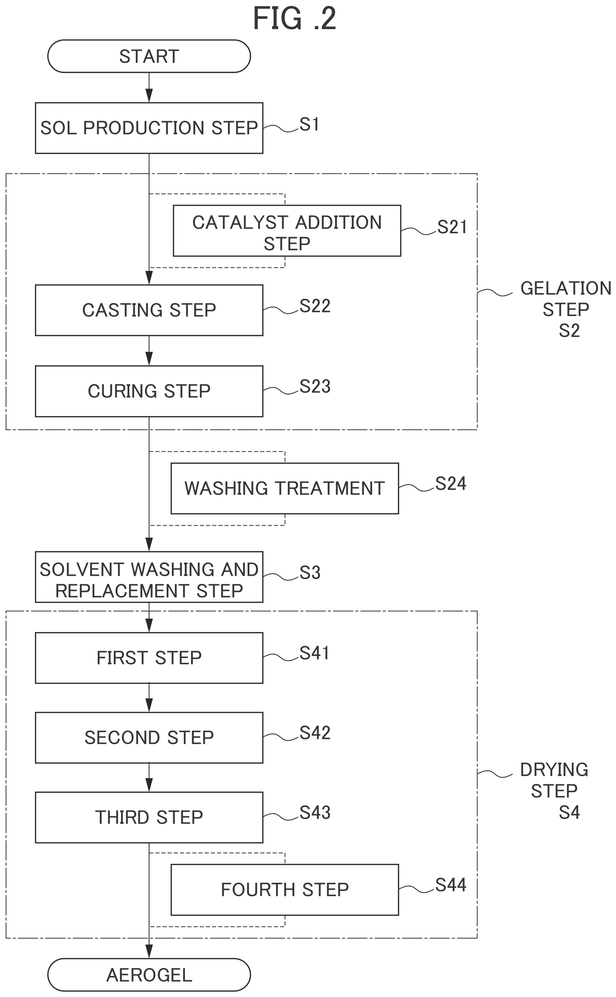

[Fig. 2] Fig. 2 is a flowchart showing an order of steps performed in the method for producing an aerogel according to the present invention;

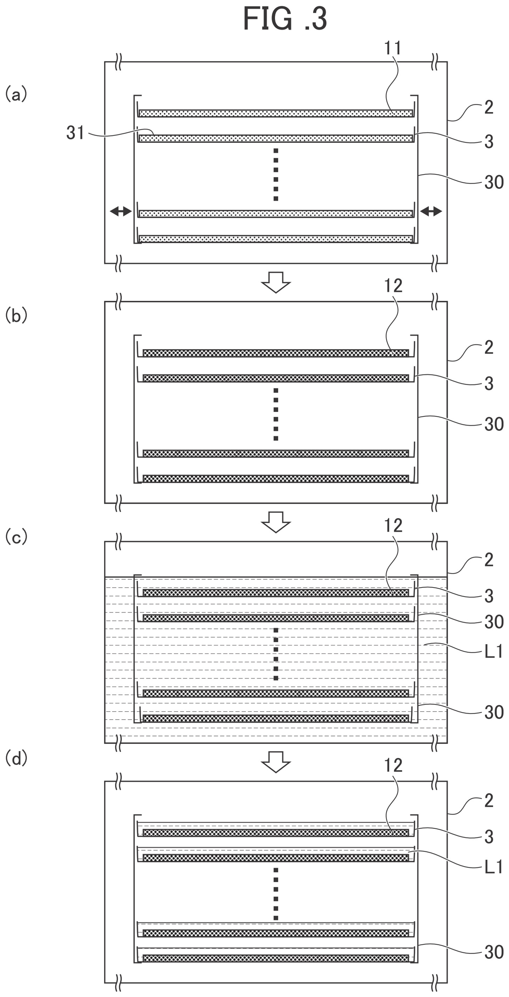

[Fig. 3] FIG. 3 is a conceptual diagram showing a state of sols or gels in steps up to a solvent washing and replacement step in the method of producing an aerogel according to the present invention. FIG. 3(a) is a conceptual diagram showing a state of the sols and casting pans when the sols are charged into the casting pans in a gelation step. FIG. 3(b) is a conceptual diagram showing a state of the gel and the casting pan after the gelation step. FIG. 3(c) is a conceptual diagram showing a state of a plurality of casting pans in a reaction chamber immersed in a first liquid phase composed of a first solvent in a solvent washing and replacement step. FIG. 3(d) is a conceptual diagram showing a state after a first solvent that is not held in the casting pans in the reaction chamber is discharged in the solvent washing and replacement step;

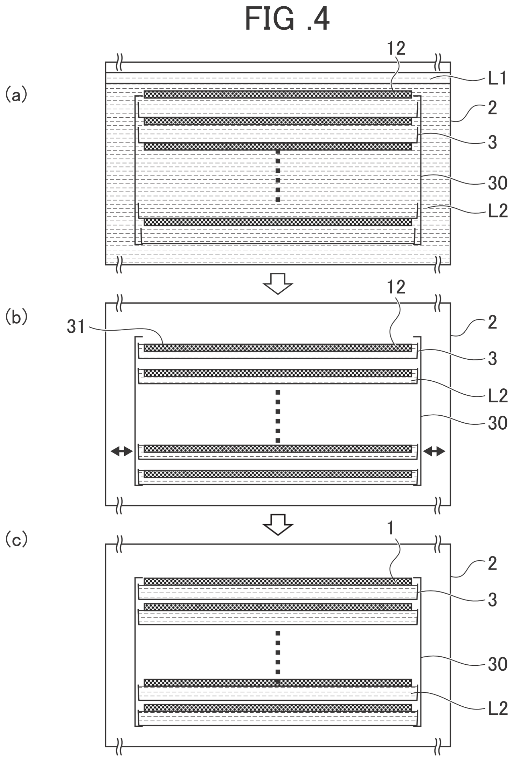

[Fig. 4] FIG. 4 is a conceptual diagram showing a state of gels in a drying step among steps in the method for producing an aerogel according to the invention. FIG. 4(a) is a conceptual diagram showing a state of gels held in all casting pans in a reaction chamber and immersed in a second liquid phase. FIG. 4(b) is a conceptual diagram showing a state in which a first solvent and an excess second solvent in the reaction chamber are discharged and the second solvent is supplied to a plurality of the casting pans in the drying step. FIG. 4(c) is a conceptual diagram showing a state of aerogels that have finished drying and floated to interfaces of the second liquid phases in the drying step;

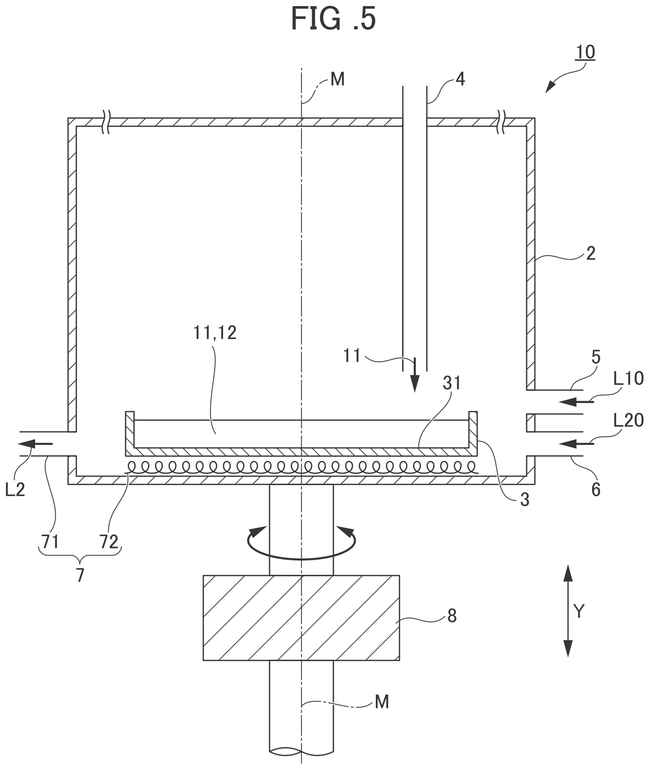

[Fig. 5] Fig. 5 is a schematic diagram showing one exemplary reaction device to be used in the method of producing an aerogel according to the present invention; and

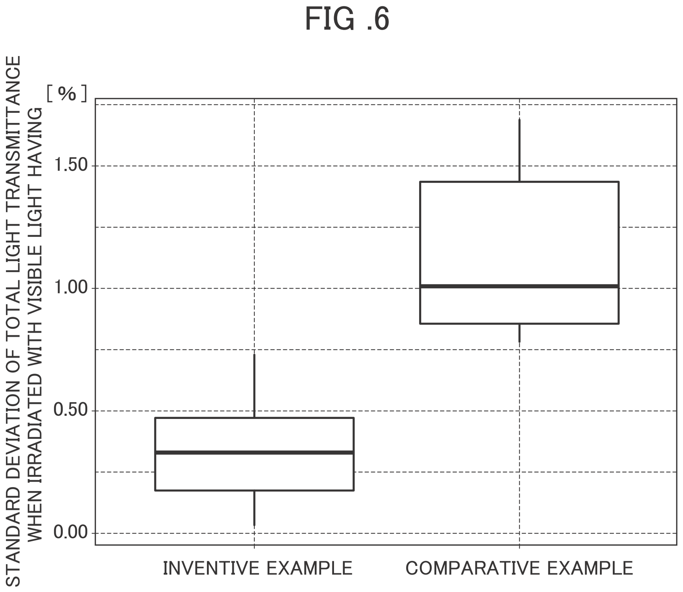

[Fig. 6] Fig. 6 is a graph showing a standard deviation of a total light transmittance when irradiated with visible light having a wavelength of 550 nm for each of aerogels of the inventive example and the comparative example.

### PREFERRED MODE FOR CARRYING OUT THE INVENTION

Hereinafter, specific embodiments of the present invention will be described in detail with reference to the drawings. The present invention is not limited to the following embodiments, and various modifications can be made without modifying the summary of the present invention.

### [Regarding configuration of aerogel]

An aerogel of the present invention has a pore structure formed by a fibrous skeleton continuous in a mesh form and a plurality of pores defined by the skeleton and contains Si. The aerogel has a surface including a surface region in a shape of a square having dimensions of at least 300 mm on each of four sides, and has a standard deviation of a total light transmittance when the surface region is irradiated with visible light having a wavelength of 550 nm of 0.60% or more on a 10 mm thickness basis.

The present inventors have focused on a standard deviation of a light transmittance when a square surface region of an aerogel containing Si is irradiated with visible light at three positions: a center position of the square surface region, a corner position of the square surface region, and a center position of a side of the square surface region, and have found that variation in a total light transmittance when the aerogel is irradiated with visible light can be reduced even if the aerogel has a relatively large area by performing one or both of a gelation step of forming a gel by cross-linking a sol and a drying step of drying the gel while oscillating the sol or the gel formed in a casting pan in a horizontal oscillation direction parallel to a bottom surface of the casting pan while the sol or the gel is held in the casting pan. In this case, an aerogel with a high yield and a sound state without a defect such as a crack can be produced even if the aerogel has a relatively large area (specifically, a size of a surface including a surface region in a shape of a square having dimensions of at least 300 mm on each of four sides) by optimizing parameters of a total light transmittance when irradiated with visible light, and more specifically, setting a standard deviation of the total light transmittance when the aerogel is irradiated with visible light having a wavelength of 550 nm (hereinafter simply referred to as "standard deviation of a total light transmittance") to be 0.60% or less on a 10 mm thickness basis.

As used herein, an aerogel "without a defect such as a crack" means that a defect such as a crack is not visible when the aerogel is visually assessed, and more specifically, that there are no defects such as cracks of 100 µm or more in length or pinholes of 100 µm or more.

FIG. 1 is a graph showing a relationship between a standard deviation of a total light transmittance when irradiated with visible light having a wavelength of 550 nm and a breakage probability of the aerogel of the present invention in which the horizontal axis represents the standard deviation of a total light transmittance and the vertical axis represents the breakage probability of the aerogel. In FIG. 1, an example of a broken aerogel is plotted as a "breakage probability = 1" and an example of an unbroken aerogel is plotted as a "breakage probability = 0" when the standard deviation of a total light transmission is varied. From these plots, a logistic regression curve was then obtained using a standard deviation (%) of a total light transmittance as an explanatory variable and presence of breakage as an objective variable, and is shown as a solid line in the graph in FIG. 1. When the standard deviation of a total light transmittance of the aerogel is 0.65% or less on a 10 mm thickness basis, the breakage probability is less than 0.5. When the standard deviation of a total light transmittance of the aerogel is 0.60% or less on a 10 mm thickness basis, there are no more cases of a broken aerogel. Furthermore, when the standard deviation of a total light transmittance of the aerogel is 0.50% or less on a 10 mm thickness basis, the breakage probability is almost zero in the logistic regression curve. Therefore, the standard deviation of a total light transmittance of the aerogel is preferably 0.60% or less and more preferably 0.500 or less on a 10 mm thickness basis. This is also evident from the fact that when the logistic regression curve is obtained using the standard deviation of total light transmittance as an explanatory variable and the presence of breakage as an objective variable, a threshold value of the explanatory variable at which the breakage probability is 50% is more than 0.60%, as shown in FIG. 1.

A specific configuration of an aerogel of the present invention will be described below.

Here, an aerogel of the present invention has a surface including a surface region in a shape of a square having dimensions of at least 300 mm on each of four sides, and. In such an aerogel with a large surface dimension, a bending stress upon shrinkage and restoration tends to be high, especially on an outside of the surface. Even in such a case, the standard deviation of a total light transmittance when irradiated with visible light can be reduced, thereby obtaining an aerogel with a high yield and a sound state without a defect such as a crack. Therefore, the aerogel can be preferably used in an application that requires a large area, such as architectural insulation.

Furthermore, the aerogel of the present invention has a standard deviation of a total light transmittance when a surface region of 300 mm square on a surface is irradiated with visible light having a wavelength of 550 nm of 0.60% or less on a 10 mm thickness basis. Here, the surface region of 300 mm square can be extracted by a 300 mm square located overlapping, for example, a center (center of gravity) of the aerogel. A measurement point for the total light transmittance on the surface region is not particularly limited, but from the viewpoint of evaluating ease of breakage of the aerogel upon drying, for example, a plurality of points including a center and a periphery of the surface region of 300 mm square (in particular, three positions at a center position of the square, a corner position of the square, and a center position of a side of the square (a center position of a side connecting adjacent corners of the square)) may be set.

In this regard, for a square aerogel which is the most common shape for an industrial product, a position where a pore structure is non-uniform with respect to another position (typically center position of the square) is often a corner position of the square and a center position of a side of the square. Variation in the total light transmittance on a basis of the center position of the square often appears differently at the corner position of the square and at the center position of the side of the square, depending on manufacturing conditions (shape of a chamber, arrangement of a gel, how to transfer a temperature to a gel, a method of stirring, etc.). Therefore, it is possible to suppress breakage of the aerogel when the gel is dried by taking the standard deviation of a total light transmittance at three positions: the center position of the square, the corner position of the square, and the center position of the side of the square, and decreasing the standard deviation of the three positions. Therefore, an aerogel with a high yield and a sound state without a defect such as a crack can be provided even if the aerogel has a relatively large area by using an aerogel with a small standard deviation of a total light transmittance at the three positions.

Note that, the standard deviation of a total light transmittance is defined as a standard deviation when total light transmittances obtained for all measurement points are converted to numerical values on a 10 mm thickness basis and used as a general population.

Thus, when the standard deviation of a total light transmittance when irradiated with visible light is 0.60% or less on a 10 mm thickness basis, a fibrous skeleton continuous in a mesh form in a pore structure of the aerogel is distributed nearly uniformly along a surface direction, so that the aerogel has high homogeneity and a gel, which is a precursor of the aerogel, also has high homogeneity. For example, if an aerogel is produced by drying at atmospheric pressure, a shape of a gel can be shrunk and restored while maintaining a similar shape when a volume of the gel is shrunk during drying of the gel at atmospheric pressure or when the volume of the gel is subsequently restored to obtain the aerogel, thereby preventing a bending stress due to deformation from occurring in the gel. Therefore, the aerogel of the present invention can have a high yield and a sound state without a defect such as a crack even if the aerogel has a relatively large area.

Furthermore, the aerogel of the present invention preferably has a total light transmittance when a surface region of 300 mm square on a surface is irradiated with visible light having a wavelength of 550 nm of 50% or more and more preferably 70% or more on a 10 mm thickness basis. This reduces a number of elements that absorb or reflect visible light in the aerogel to thereby make it easier for a inhomogeneous area that causes a bending stress to be produced. Thus, the bending stress due to deformation can be even less likely to generate.

A size of the aerogel of the present invention is a size of a surface including a surface region in a shape of a square having dimensions of at least 300 mm on each of four sides. Therefore, when a surface of the aerogel of the present invention is viewed in a plane view, both the longitudinal and transverse dimensions are 300 mm or more. On the other hand, an upper limit of the size of the aerogel of the present invention is not particularly limited, and one or both of longitudinal and transverse dimensions may be 5000 mm or 3000 mm when the surface is viewed in a plane view.

A thickness of the aerogel of the present invention is not particularly limited, and an average thickness can be, for example, 1 mm or more and 30 mm or less. The aerogel is preferably plate-shaped and particularly preferably both sides of the aerogel are flat, from the viewpoint of facilitating shrinkage and restoration of a gel in a casting pan, and, in this case, a thickness of the aerogel is preferably uniform.

The aerogel of the present invention has a Si-containing microstructure formed by the fibrous skeleton which is continuous in a mesh form and a plurality of pores which is defined by the skeleton.

Here, the microstructure of the aerogel is a microstructure containing a silicon atom in a molecule, an example of which may be a polysilsesquioxane-based microstructure. Among these, the polysilsesquioxane-based microstructure can be formed by a hydrolysis reaction and a polycondensation reaction of a silicon alkoxide. In particular, a polymethylsilsesquioxane (PMSQ, MeSiO_{1.5}) aerogel can form a transparent aerogel and is formed by a hydrolysis reaction and a polycondensation reaction of methyltrialkoxysilane (MeSi(OR)₃) in combination with a surfactant serving as a phase separation inhibitor. Examples of the hydrolysis reaction and the polycondensation reaction for forming the PMSQ aerogel may include, for example, an acid-catalyzed hydrolysis reaction shown in Formula (I) below and a base-catalyzed polycondensation reaction shown in Formula (II).

MeSi(OR)₃ + 3H₂O → MeSi(OH)₃ + 3ROH: Formula (I)

MeSi(OH)₃ → MeSiO_{1.5} + 1.5H₂O: Formula (II)

The microstructure of the aerogel has a fibrous skeleton which is continuous in a mesh form. This allows formation of a plurality of micropores by the fibrous skeleton, which decreases a density and thus thermal conductivity of the aerogel to improve its thermal insulation property.

Here, an average pore size of the plurality of pores in the microstructure of the aerogel is not particularly limited, and may be in a range of 5 nm or more and 100 nm or less, for example. The average pore size of the pores can be defined as an average inner diameter when the pore is approximated as a tube and an inner diameter of the tube is approximated as a circle. Note that, a lower limit of the average inner diameter of the pores may be 5 nm or more, 7 nm or more, 10 nm or more, 20 nm or more, 30 nm or more, or 50 nm or more. An upper limit of the average inner diameter of the pores may be 100 nm or less, 90 nm or less, 80 nm or less, or 70 nm or less. Since the average pore size of the pores is equal to or smaller than a mean free path (MFP) at atmospheric pressure of elemental molecules that make up air, an aerogel placed in air at atmospheric pressure becomes filled with air inside the pores.

Porosity of an aerogel, i.e., a percentage of a pore volume of through holes (pores) to a total volume of the aerogel, is not particularly limited, and is preferably 70% or more. In particular, the porosity, the percentage of the pore volume of the through holes (pores) to the total volume of the aerogel, may also be 75% or more, 80% or more, 85% or more, or 90% or more. The aerogel of the present invention can be obtained by drying at atmospheric pressure, even with such high porosity.

The aerogel may have a low density of 0.15 g/cm³ or less, for example. Here, the density of the aerogel may be a numerical value determined, for example, by a mercury intrusion method. The lower the density of the aerogel, the lower thermal conductivity of the aerogel, and, accordingly, the aerogel has an improved heat insulation property. The aerogel of the present invention is difficult to break even when the density is 0.15 g/cm³ or less, and, in this case, the thermal conductivity is as low as about 0.01 W/m·K to 0.02 W/m·K.

The aerogel of the present invention may also include other components that are intended to impart functionality, improve appearance, and impart decorativeness, in addition to the above-mentioned configuration. For example, the aerogel may include an antistatic agent, a lubricant, an inorganic pigment, an organic pigment, an inorganic dye, an organic dye, etc. The aerogel of the present invention may also include water, an organic solvent, a surfactant, a catalyst, and degradation products thereof as unavoidable components in production. The aerogel of the present invention may also include dust that is mixed in from a production space or a production device as an unavoidable component in production.

### [Regarding configuration of method for producing aerogel]

The below-described method can be used as an example of methods capable of producing the above-described aerogel.

Fig. 2 is a flowchart showing an order of steps performed in the method for producing an aerogel 1 according to the present invention. FIG. 3 is a conceptual diagram showing a state of sols 11 or gels 12 in steps up to a solvent washing and replacement step in the method of producing an aerogel 1 according to the present invention. FIG. 3(a) is a conceptual diagram showing a state of the sols 11 and casting pans 3 when the sols 11 are charged into the casting pans 3 in a gelation step S2. FIG. 3(b) is a conceptual diagram showing a state of the gel 12 and the casting pan 3 after the gelation step S2. FIG. 3(c) is a conceptual diagram showing a state of a plurality of casting pans 3 in a reaction chamber 2 immersed in a first liquid phase L1 composed of a first solvent in a solvent washing and replacement step S3. FIG. 3(d) is a conceptual diagram showing a state after a first solvent that is not held in the casting pans 3 in the reaction chamber 2 is discharged in the solvent washing and replacement step S3. FIG. 4 is a conceptual diagram showing a state of sols 11 or gels 12 in steps after a solvent washing and replacement step S3 in the method for producing an aerogel 1 according to the invention. FIG. 4(a) is a conceptual diagram showing a state of a plurality of casting pans 3 in a reaction chamber 2 immersed in a second liquid phase L3 composed of a second solvent in the solvent washing and replacement step S3. FIG. 4(b) is a conceptual diagram showing a state in which a first solvent and an excess second solvent in the reaction chamber 2 are discharged and the second solvent is supplied to the plurality of casting pans 3 in the solvent washing and replacement step S3. FIG. 4(c) is a conceptual diagram showing a state of aerogels 1 that have finished drying and floated to interfaces of the second liquid phases L2 in a drying step S4.

As shown in FIGs. 2 to 4, the method for producing an aerogel 1 of the present invention includes a sol production step S1 in which a sol 11 is produced by adding a silicon compound to an aqueous solution to thereby hydrolyze the silicon compound; a gelation step S2 in which the sol 11 is charged into a casting pan 3 and cured through a cross-linking reaction in the casting can 3, thereby forming a gel (wet gel) 12; a solvent washing and replacement step S3 in which an internal solvent present on a surface of and within the gel 12 is washed and replaced with a first solvent having a low surface tension of 45 mN/m or less at 20°C by supplying the first solvent into the casting pan 3 in which the gel 12 has been formed; and a drying step S4 in which a second solvent having a specific gravity higher than that of the first solvent and being phase-separated from the first solvent is dried in the casting pan 3 in which the second solvent has been supplied to produce an aerogel 1 containing Si, at least one of the gelation step S2, the solvent washing and replacement step S3, or the drying step S4 is performed with oscillating the sol 11 or the gel 12 formed in the casting pan 3 in a horizontal oscillation direction parallel to a bottom surface 31 of the casting pan 3 while the sol or the gel is held in the casting pan.

In at least one of the gelation step S2, the solvent washing and replacement step S3, or the drying step S4 in the method for producing an aerogel 1 of the present invention, the sol 11 or the gel 12 formed in the casting pan 3 is oscillated in a horizontal oscillating direction parallel to a bottom surface 31 of the casting pan 3 while the sol or the gel is held in the casting pan 3, so that an atmosphere in contact with the sol 11 or the gel 12 relatively flows relative to the sol 11 or the gel 12 as a whole due to the oscillation, thereby increasing uniformity of an environment around the sol 11 or the gel 12 (temperature of the atmosphere, concentrations of components, or flow velocity). As a result, homogeneity of the sol 11 or the gel 12 after the gelation step S2 or the drying step S4 can be improved, which in turn improves homogeneity of the aerogel 1. Therefore, an aerogel 1 with a small standard deviation of a total light transmittance when irradiated with visible light can be obtained.

In this regard, a common means for making the environment around the sol 11 or the gel 12 uniform is to apply a driving force to a fluid (gas or liquid) constituting the environment to agitate it. However, when the driving force is applied to the fluid constituting the environment, the driving force cannot be propagated uniformly throughout the environment around the sol 11 or the gel 12 because the driving force is significantly attenuated depending on a distance from a point of application where the driving force is applied or a shape of a space. In this regard, in the method for producing an aerogel 1 of the present invention, the sol 11 or the gel 12 held in the casting pan 3, rather than the fluid constituting the environment, is oscillated, so that the entire sol 11 or gel 12 can be oscillated as is, allowing the environment around the sol 11 or the gel 12 to be uniform.

At this time, it is not desirable to violently oscillate the gel 12 in random directions including a thickness direction, since especially the gel 12 is highly brittle. Even in such a case, taking advantage of the fact that the gel 12 has a two-dimensional shape (plate shape) held in the casting pan 3, the gel 12 is less likely to break even when relatively violently oscillated by oscillating the casting pan 3 in which the gel 12 is held along a plane parallel to a bottom surface 31 of the casting pan 3.

The oscillation of the casting pan 3 in which the sol 11 or the gel 12 is held is desirably completed within a limited space such as the reaction chamber 2 and continuous, so it is preferably a rotational motion. As an example, as shown in FIG. 5 below, the casting pan 3 (or a casting pan holder 30 in which the casting pan 3 is held) is placed in the reaction chamber 2 so that a surface of the sol 11 or the gel 12 (the bottom surface 31 of the casting pan 3) is horizontal, and the reaction chamber 2 is repeatedly rotated around an axis (center axis M) in a height direction Y of the reaction chamber 2 alternately clockwise and counterclockwise, so that the casting pan 3 in which the sol 11 or the gel 12 is held can be oscillated in a horizontal oscillating direction parallel to the bottom surface 31 of the casting pan 3.

When the oscillation is made in the horizontal oscillating direction with rotational motion along a fixed direction, a fluid constituting the environment around the sol 11 or the gel 12 flows in sync with the rotational motion due to frictional resistance with the sol 11 or the gel 12, and, thus, a relative velocity of the oscillation relative to the sol 11 or the gel 12 may be damped. Therefore, from the viewpoint of suppressing such damping, it is preferred to change an oscillation velocity of the casting pan 3 in at least one direction. This can increase uniformity of the environment in contact with the surface of the sol 11 or the gel 12 and uniformity of the environment in contact with the sol 11 or the gel 12 held in different casting pans 3, especially when a plurality of casting pans 3 are oscillated in the same device. When the oscillation velocity of the casting pan 3 is changed, an oscillation direction may be reversed, but only the velocity may be changed without changing the oscillation direction of the casting pan 3, especially when the casting pan 3 is oscillated by rotational motion. The oscillating velocity of the casting pan 3 may be temporarily changed to zero, thereby making the oscillation of the casting pan 3 intermittent. The oscillation velocity may be changed at a fixed or irregular cycle.

When the casting pan 3 is oscillated in the horizontal oscillating direction by a rotational motion about a center of the casting pan 3 in which the sol 11 or the gel 12 is held as a center of rotation, a relative velocity of the sol 11 or the gel 12 to the fluid constituting the environment therearound depends on a distance from the center of rotation. Thus, the oscillation may be insufficient in the vicinity of the center of rotation. Therefore, from the viewpoint of further increasing the uniformity of the environment around the sol 11 or the gel 12, the motion of the casting pan 3 when oscillated is preferably complicated. As an example, the casting pan 3 may be oscillated by a planetary motion of the casting pan holder 30 in which the casting pan 3 is held along a plane direction of a surface of the sol 11 or the gel 12. Thus, by constantly changing a direction and a velocity of the oscillation of the casting pan 3, the uniformity of the environment in contact with the sol 11 or the gel 12 held in the casting pan 3 can be further increased. Among these, from the viewpoint of further increasing the uniformity of the environment in contact with the sol 11 or the gel 12 held in the casting pan 3, when the casting pan holder 30 is oscillated by a planetary motion, a direction of the motion is preferably repeatedly changed to a direction opposite thereto.

Here, the casting pan holder 30 may be placed so that the plurality of casting pans 3 are arranged along a thickness direction of the resulting aerogel 1, as shown in FIG. 3. This allows an area of the casting pan holder 30 along the place direction of the aerogel 1 to be smaller, which facilitates the oscillation of the casting pan 3 in which the sol 11 or the gel 12 is held.

A production device to be used in the method for producing an aerogel 1 of the present invention is preferably one in which steps from the gelation step S2 to the drying step S4 are performed in the same reaction chamber 2. This eliminates a need to open the reaction chamber 2 between each of the sol production step S1, the gelation step S2, the solvent washing and replacement step S3, and the drying step S4, so that inhomogenization due to a difference in the same sol 11 or gel 12 in time required for following a sudden environmental change when the reaction chamber 2 is opened can be suppressed. In addition, the sol 11 or the gel 12 does not need to be transferred between devices for the sol production step S1, the gelation step S2, the solvent washing and replacement step S3, and the drying step S4, which prevents the gel 12 from breaking, especially when the gel 12 is transferred.

On the other hand, the production device to be used in the method for producing an aerogel 1 of the present invention may be one in which at least the gelation step S2 and the drying step S4 among steps from the gelation step S2 to the drying step S4 are performed in separate reaction chambers. This allows the gelation step S2 and the drying step S4 which are time-consuming among steps for producing the aerogel 1 to be performed separately, enabling more efficient production of the aerogel 1. Even in this case, from the viewpoint of preventing damage to the gel due to rapid drying, the solvent washing and replacement step S3 and the drying step S4 are preferably performed in the same reaction chamber.

Each step of the method for producing the aerogel 1 of the present invention will be described below.

### [Sol production step S1]

Among these, a sol production step S1 is a step in which a sol 11 is produced by adding at least a silicon compound to an aqueous solution to thereby hydrolyze the silicon compound. The sol 11 for producing an aerogel 1 of the present invention contains a siloxane bond and can be produced through hydrolysis of a silicon compound by adding various raw materials including the silicon compound (main raw material) to a predetermined aqueous solution and mixing the resultant with stirring.

The silicon compound serving as a raw material may be a silane compound, more specifically, at least one of a bifunctional silane compound, a trifunctional silane compound, or a tetrafunctional silane compound.

As used herein, the bifunctional silane compound refers to a silane compound having two siloxane bonds, the trifunctional silane compound refers to a silane compound having three siloxane bonds, and the tetrafunctional silane compound refers to a silane compound having four siloxane bonds.

Examples of the bifunctional silane compound include dialkoxysilane, diacetoxysilane, etc. A desired embodiment of the dialkoxysilane includes one in which an alkoxy group contains 1 to 9 carbon atoms. Specific examples thereof include dimethyldimethoxysilane, diethyldimethoxysilane, diisobutyldimethoxysilane, etc. These compounds may be used alone, or a plurality of the compounds may be used in combination. In the present invention, dimethyldimethoxysilane (DMDMS) is particularly preferably used as the bifunctional silane compound.

Examples of the trifunctional silane compound include trialkoxysilane, triacetoxysilane, etc. A desired embodiment of the trialkoxysilane includes one in which an alkoxy group contains 1 to 9 carbon atoms. Examples thereof include methyltrimethoxysilane, ethyltrimethoxysilane, propyltrimethoxysilane, hexyltrimethoxysilane, octyltrimethoxysilane, methyltriethoxysilane, ethyltriethoxysilane, propyltriethoxysilane, pentyltriethoxysilane, hexyltriethoxysilane, octyltriethoxysilane, etc. These compounds may be used alone, or a plurality of the compounds may be used in combination. In the present invention, methyltrimethoxysilane (MTMS) is particularly preferably used as the trifunctional silane compound.

Examples of the tetrafunctional silane compound include tetraalkoxysilane, tetraacetoxysilane, etc. A desired embodiment of the tetraalkoxysilane includes one in which an alkoxy group contains 1 to 9 carbon atoms. Examples thereof include tetramethoxysilane, tetraethoxysilane, tetrapropoxysilane, tetraisopropoxysilane, etc. These silane compounds may be used alone, or a plurality of the silane compounds may be used in combination. In the present invention, tetramethoxysilane (TMOS) is particularly preferably used as the tetrafunctional silane compound.

In the sol production step S1, in addition to the silicon compound (main raw material), a surfactant, an acid, or an organic solvent can be used as an auxiliary raw material.

Among these, the surfactant contributes to formation of a pore structure of the below-described aerogel 1 in the below-described gel production step. As the surfactant capable of being used for producing the aerogel 1, a non-ionic surfactant, an ionic surfactant, etc., may be used. Examples of the ionic surfactant may include a cationic surfactant, an anionic surfactant, an amphoteric surfactant, etc. Among these, the non-ionic surfactant may be preferably used.

An amount of the surfactant to be added depends on a type or a mixing ratio of the silicon compound or a type of surfactant, but can be, for example, in a range of 0.001 parts by mass to 100 parts by mass, in particular, preferably in a range of 0.01 parts by mass to 90 parts by mass and further preferably in a range of 0.1 parts by mass to 80 parts by mass relative to 100 parts by mass of a total amount of the silicon compound serving as the main raw material.

The acid acts as a catalyst upon hydrolysis and can accelerate a reaction rate of the hydrolysis. Specific examples of the acid include an inorganic acid, an organic acid, an organic acid salt, etc. The acid may be used alone, or a mixture of two or more types thereof may be used.

Examples of the inorganic acid include hydrochloric acid, sulfuric acid, sulfurous acid, nitric acid, fluorinated acid, phosphoric acid, phosphorous acid, hypophosphorous acid, bromic acid, chloric acid, chlorous acid, hypochlorous acid, etc. Examples of the organic acid include a carboxylic acid such as acetic acid, formic acid, propionic acid, oxalic acid, malonic acid, succinic acid, citric acid, malic acid, adipic acid, azelaic acid, etc. As the organic acid salt, acidic aluminum phosphate, acidic magnesium phosphate, acidic zinc phosphate, etc., may be used. In the present invention, acetic acid which is the organic acid is preferably used as the acid.

A concentration of the acid to be added may be, for example, in a range of 0.0001 mol/L to 0.1 mol/L, in particular, preferably in a range of 0.0005 mol/L to 0.05 mol/L, and further preferably in a range of 0.001 mol/L to 0.01 mol/L relative to the sol 11 to be obtained in the sol production step S1.

As the organic solvent, an alcohol such as methanol, ethanol, 1-propanol, 2-propanol (isopropanol), 1-butanol, 2-butanol, t-butanol, etc., may be preferably used. These may be used alone, or a mixture of two or more types thereof may be used. Furthermore, an amount of the organic solvent to be added to the solution to be prepared may be, for example, in a range of 4 mol to 10 mol, in particular, preferably in a range of 4.5 mol to 9 mol, further preferably in a range of 5 mol to 8 mol relative to 1 mol of a total amount of the silicon compound serving as a main raw material from the viewpoint of compatibility.

A temperature and stirring time of the solution in the sol production step S1 depend on types or amounts of the silicon compound, the surfactant, water, the acid, the organic solvent, etc. included in a solution to be mixed, and may be, for example, in a range of 0.05 hours to 48 hours under a temperature environment of 0°C to 70°C, and preferably for 0.1 hours to 24 hours under a temperature environment of 20 to 50°C. This results in hydrolysis of the silicon compound, thereby forming a colloid and thus producing a sol 11.

Note that, an auxiliary material and/or a degradation product of the auxiliary material to be used in the sol production step S1 may be mixed in the resulting aerogel 1 as an unavoidable component.

### [Gelation step S2]

A gelation step S2 is a step in which the sol 11 produced in the sol production step S1 is charged into a casting pan 3 and cured through a cross-linking reaction of the sol in the casting pan 3 to form a gel 12. In this step, the sol 11 is charged into the casting pan 3 as shown in FIG. 3(a) and then the gel 12 is formed in the casting pan 3 as shown in FIG. 3(b). Here, the gelation step S2 can be broadly divided into a catalyst addition step S21 in which a basic catalyst is added to the sol 11, a casting step S22 in which the sol 11 to which the basic catalyst has been added is charged into the casting pan 3, and a curing step S23 in which the gel 12 is produced by curing a solution in the casting pan 3.

Among these, examples of the basic catalyst to be added to the sol 11 in the catalyst addition step S21 include an ammonium compound such as ammonium hydroxide, ammonium fluoride, ammonium chloride, ammonium bromide, etc.; an alkali metal hydroxide such as lithium hydroxide, sodium hydroxide, potassium hydroxide, cesium hydroxide, etc.; basic sodium phosphate such as sodium metaphosphate, sodium pyrophosphate, sodium polyphosphate, etc.; a fatty amine such as allylamine, diallylamine, triallylamine, isopropylamine, diisopropylamine, ethylamine, diethylamine, triethylamine, 2-ethylhexylamine, 3-ethoxypropylamine, diisobutylamine, 3-(diethylamino)propylamine, di-2-ethylhexylamine, 3-(dibutylamino)propylamine, tetramethylethylenediamine, t-butylamine, sec-butylamine, propylamine, 3-(methylamino)propylamine, 3-(dimethylamino)propylamine, 3-methoxyamine, dimethylethanolamine, methyldiethanolamine, diethanolamine, triethanolamine, etc.; a nitrogen-containing heterocyclic compound such as morpholine, N-methylmorpholine, 2-methylmorpholine, piperazine or a derivative thereof, piperidine or a derivative thereof, imidazole or a derivative thereof, etc.. Here, the basic catalyst may be used alone, or a mixture of two or more types thereof may be used.

The basic catalyst may also be a nitrogen compound that generates the basic catalyst upon heating. The nitrogen compound is added as a compound that generates the basic catalyst upon heating in the casting step S22 or the curing step S23. Specific examples thereof include urea, an amide compound such as formamide, N-methylformamide, N,N-dimethylformamide, acetamide, N-methylacetamide, or N,N-dimethylacetamide, a heterocyclic compound such as hexamethylenetetramine, etc. Among these, urea may be suitably used in the curing step S23 from the viewpoint of accelerating a producing rate of the gel. Since the nitrogen compound which generates the basic catalyst upon heating can generate the basic catalyst upon heating in the curing step S23, the nitrogen compound can be added in the sol production step S1 without performing the catalyst addition step S21.

Among these, an ammonium hydroxide aqueous solution is preferred from the viewpoints of a high reaction acceleration effect as a catalyst, and a possibility of the cross-linking reaction from the sol 11 to the gel 12 in a short time, and a possibility of formation of an aerogel with fewer defects. The ammonium hydroxide aqueous solution is also excellent from the viewpoint of its high volatility since it volatilizes in a solvent washing and replacement step S3 and a drying step S4 described below and thus is less likely to remain in the resulting aerogel 1.

An amount of the basic catalyst to be added to the sol 11 is preferably in a range of 0.5 parts by mass to 5 parts by mass and further preferably 1 part by mass to 4 parts by mass relative to 100 parts by mass of a total amount of the sol 11. Here, when the amount of the basic catalyst to be added is less than 0.5 parts by mass, the cross-linking reaction for forming the gel 12 from the sol 11 cannot proceed, and when the amount of the basic catalyst to be added is more than 5 parts by mass, the cross-linking reaction may be too fast to make the resulting gel 12 inhomogeneous.

The casting step S22 is a step in which the sol 11 to which the basic catalyst has been added is charged into the casting pan 3 and this step is for obtaining an aerogel product with a desired shape. The casting pan 3 can be made of either a metal or a synthetic resin, but from the viewpoints of nonflammability in consideration of plant operation and achieving both planarity in shape and releasability, a pan with a release coating layer coated on a substrate made of a metal can be suitably used. Here, examples of the metal may include an iron alloy such as stainless or steel. The release coating layer may be, for example, a coating layer composed of a fluorinated resin such as Teflon (registered trademark).

The casting pan 3 has a shape according to a desired aerogel product. For example, when a plate-shaped aerogel 1 is produced, a concave tray of which one end is open can be used as a mold. A surface of the casting pan 3 is preferably flat from the viewpoint of facilitating shrinkage and restoration of the gel in the casting pan 3.

The curing step S23 is a step in which the sol 11 which has been charged in the casting pan 3 is cured in the casting pan to produce the gel 12 and to mold the gel along a shape of an inner wall of the casting pan 3.

The curing step S23 allows the cross-linking reaction from the sol 11 to the gel 12 to proceed by applying a predetermined energy over a predetermined time period. An example of the energy is thermal energy, more specifically, heating to a temperature range of 30°C to 90°C, preferably 40°C to 80°C. Here, the heating may be heater heating or steam heating with water vapor or organic solvent vapor. The energy may be used alone, or a plurality of means may be used in combination.

Time required for curing in the curing step S23 depends on a composition of the silicon compound, types or amounts of the surfactant, water, the acid, the organic solvent, the basic catalyst, etc., or a type or a density of the energy to be used in the curing step S23, and may be, for example, in a range of 0.01 hours to 7 days. When types of the basic catalyst and the energy are optimized, gelation may be completed in 0.01 hours to 24 hours. The curing may also be curing in which heat (temperature) and time are changed in a multistep manner.

In the curing step S23, warm water may be supplied to the reaction chamber 2 and immediately discharged to form a layer of water on a surface of the gel 12 in order to prevent a crack from occurring due to drying. In addition to the warm water to be supplied into the reaction chamber 2 in the curing step S23, a liquid with a temperature difference of 10°C or less relative to an atmospheric temperature of the reaction chamber 2 is preferably supplied into the reaction chamber 2 in the method for producing the aerogel 1 of the present invention from the viewpoint of preventing damage of the gel 12. In other words, at least one of warm water to be used in the curing step S23, a washing agent to be used in the below-described washing treatment S24, a first solvent to be used in the solvent washing and replacement step S3, or a second solvent to be used in the drying step S4 is preferably supplied to the reaction chamber 2 after it is adjusted so that the temperature difference relative to the atmospheric temperature of the reaction chamber 2 is 10°C or less.

Here, the curing step S23 is preferably performed with a concentration of water vapor contained in the atmosphere in the reaction chamber 2 being adjusted to a range of 60% or more and 100% or less and further preferably to a range of 80% or more and 100% or less of a saturated water vapor pressure. This allows evaporation of water from the gel 12 in the gelation step S2 to be properly controlled, thereby suppressing inhomogenization of the gel 12 due to evaporation of water contained in the gel 12.

In the curing step S23, the gel 12 held in the casting pan 3 is preferably oscillated in the horizontal oscillating direction parallel to the bottom surface 31 of the casting pan 3. This increases uniformity in temperature of the gel 12 and thus further increases homogeneity of the pore structure of the gel 12. As a result, when the internal solvent is discharged to the outside of the gel in the below-described drying step S4, uniformity in pore structure (pore size) is increased and capillary forces are almost uniformly generated, allowing the gel to dry and shrink to a similar shape. In particular, from the viewpoint of increasing uniformity in concentration of water vapor contained in an atmosphere in the vicinity of the gel 12 and thus further increasing homogeneity in the pore structure of the gel 12, the gel 12 held in the casting pan 3 is preferably oscillated in a horizontal oscillating direction parallel to the bottom surface 31 of the casting pan 3 while adjusting the concentration of water vapor contained in the atmosphere in the reaction chamber 2 to the above-described range.

Note that, a material to be used in the gelation step S2 or a degradation product of the material may be mixed in the resulting aerogel 1 as an unavoidable component.

After the gelation step S2, a washing treatment S24 may be further performed to wash the acid used to produce the sol 11, the catalyst used to produce the gel 12, a reaction byproduct, etc.

A washing agent to be used in the washing treatment S24 may be a wide range of organic solvents and, in particular, a solvent different from the below-described first solvent is preferably used. For example, various organic solvents such as methanol, ethanol, n-propanol, isopropanol, 1-butanol, 2-butanol, t-butanol, acetone, methyl ethyl ketone, methyl isobutyl ketone, xylene, 1,2-dimethoxyethane, acetonitrile, hexane, toluene, diethyl ether, chloroform, ethyl acetate, tetrahydrofuran, methylene chloride, N,N-dimethylformamide, dimethyl sulfoxide, acetic acid, formic acid, etc. may be used as the washing agent. The above organic solvent may be used alone, or a mixture of two or more types thereof may be used.

Among these, methanol, ethanol, isopropanol, acetone, methyl ethyl ketone, etc., which are soluble in both an organic solvent constituting the below-described first solvent and water are preferably used as the washing agent alone, or a mixture of two or more types thereof may be used.

Washing in the washing treatment S24 can be performed by filling the reaction chamber 2 with the washing agent to immerse a plurality of casting pans 3 in which the gel 12 has been formed in the washing agent, and then discharging methanol that is not held at least in the casting pans 3. This allows the acid or the reaction byproduct contained in the gel 12 to be washed out and discharged to the outside of the gel 12. At this time, the washing agent may remain in the casting pan 3 because it is soluble in the below-described first solvent.

Here, the washing treatment S24 is preferably performed with a concentration of the washing agent contained in the atmosphere in the reaction chamber 2 being adjusted to a range of 80% or more and 100% or less and further preferably to a range of 90% or more and 100% or less of a saturated vapor pressure. This suppresses evaporation of the washing agent from the gel 12 in the washing treatment S24, thereby suppressing inhomogenization of the gel 12 due to evaporation of the washing agent contained in the gel 12.

In the washing treatment S24, the gel 12 held in the casting pan 3 is preferably oscillated in the horizontal oscillating direction parallel to the bottom surface 31 of the casting pan 3. This can increase uniformity in temperature of the gel 12 and uniformity in flow velocity of the washing agent in contact with the gel 12, and thus further increase homogeneity of the pore structure of the gel 12. In particular, from the viewpoint of also increasing uniformity in concentration of the washing agent contained in an atmosphere in the vicinity of the gel 12 and thus further increasing homogeneity in the pore structure of the gel 12, the gel 12 held in the casting pan 3 is preferably oscillated in the horizontal oscillating direction parallel to the bottom surface 31 of the casting pan 3 while adjusting the concentration of the washing agent contained in the atmosphere in the reaction chamber 2 to the above-described range.

An amount of washing agent to be used in the washing treatment S24 depends on a temperature or a device (the reaction chamber 2 or the casting pan 3) for solvent displacement, and an amount that allows the gel 12 to be entirely immersed in the washing agent supplied in the casting pan 3 is preferably used. Therefore, the amount of the washing agent is preferably in a range of 2 to 100 times a total volume of the gel 12. The washing treatment S24 is not limited to once, and may be performed a plurality of times.

### [Solvent washing and replacement step S3]

A solvent washing and replacement step S3 is a step in which a first solvent having a low surface tension of 45 mN/m or less at 20°C is supplied to the casting pan 3 in which the gel 12 has been formed, and an internal solvent and a surfactant present on a surface of and within the gel 12 are washed and replaced by the first solvent. This allows water and/or an organic solvent, which serve as the internal solvent present on a surface of and within the gel 12, to be replaced with an organic solvent suitable for drying in a short time.

In the solvent washing and replacement step S3, the gel 12 is washed with the first solvent having a surface tension of 45 mN/m or less at 20°C, and water (or an organic solvent) on a surface and within the gel 12 is replaced with the first solvent in order to suppress shrinkage damage to the gel 12 in the below-described drying step S4. As the first solvent, a liquid having a surface tension of 45 mN/m or less at 20°C can be used, examples of which include dimethyl sulfoxide (43.5 mN/m), cyclohexane (25.2 mN/m), isopropanol (21 mN/m), heptane (20.2 mN/m), and pentane (15.5 mN/m), etc.

The first solvent to be used in the solvent washing and replacement step S3 may have a surface tension of 45 mN/m or less, 40 mN/m or less, 35 mN/m or less, 30 mN/m or less, 25 mN/m or less, 20 mN/m or less, or 15 mN/m or less, and 5 mN/m or more, 10 mN/m or more, 15 mN/m or more, or 20 mN/m or more, and 5 mN/m or more, 10 mN/m or more, 15 mN/m or more, or 20 mN/m or more at 20°C. Among these, an organic solvent containing an aliphatic hydrocarbon having a surface tension in a range of 20 mN/m to 40 mN/m at 20°C is particularly suitably used as the first solvent. Such an organic solvent may be used as the first solvent alone, or a mixture of two or more types thereof may be used.

The first solvent to be used in the solvent washing and replacement step S3 preferably has a property whereby, after the solvent washing and replacement step S3 is performed, the gel 12 settles and becomes immersed in a first liquid phase L1 composed of the first solvent. Therefore, the first solvent preferably has an affinity for the gel 12 and a specific gravity lower than that of the gel 12. As used herein, the first solvent has an affinity for the gel 12 means that the solvent can penetrate into pores of the gel 12 and thus impregnate the gel 12 with the solvent. An example of such a solvent may be a solvent with a dissolution parameter in a range of 7.0 to 9.5.

Furthermore, the first solvent to be used in the solvent washing and replacement step S3 is preferably a solvent that has a lower specific gravity and a lower boiling point than those of the below-described second solvent. From this viewpoint, an organic solvent having a boiling point of 50°C to 100°C is preferably used as the first solvent, and examples thereof include a hydrocarbon solvent such as hexane (specific gravity 0.65, boiling point 69°C) or heptane (specific gravity 0.68, boiling point 98°C), an ester solvent such as methyl acetate (specific gravity 0.93, boiling point 57°C) or ethyl acetate (specific gravity 0.90, boiling point 77°C), etc.

The solvent washing and replacement step S3 can be performed by filling the reaction chamber 2 with the first solvent and immersing a plurality of casting pans 3 in which the gel 12 is formed in a first liquid phase L1 composed of the first solvent, as shown in FIG. 3(c), and then discharging the first solvent that is not held in the casting pans 3, as shown in FIG. 3(d). This allows an impurity such as an acid or a reaction byproduct contained in the gel 12 or the washing agent to be washed out and discharged to the outside of the reaction chamber 2. The gel 12 after the solvent washing and replacement step S3 is placed in a liquid phase system composed of the first liquid phase L1 in the casting pan 3.

Here, the solvent washing and replacement step S3 is preferably performed with a concentration of the first solvent contained in the atmosphere in the reaction chamber 2 being adjusted to a range of 80% or more and 100% or less and further preferably to a range of 90% or more and 100% or less of a saturated vapor pressure. This suppresses evaporation of the first solvent from the gel 12 in the solvent washing and replacement step S3, thereby suppressing inhomogenization of the gel 12 due to evaporation of the first solvent contained in the gel 12.

In the solvent washing and replacement step S3, the gel 12 held in the casting pan 3 is preferably oscillated in the horizontal oscillating direction parallel to the bottom surface 31 of the casting pan 3. This increases uniformity in temperature of the gel 12 and uniformity in flow velocity of the solvent in the first liquid phase L1 in contact with the gel 12. As a result, the pore structure of the gel 12 can be washed (the surfactant, etc., can be removed) in a more uniform manner and homogeneity of the pore structure of the gel 12 can be further increased. As a result, when the internal solvent is discharged to the outside of the gel in the below-described drying step S4, uniformity in pore structure (pore size) is increased and capillary forces are almost uniformly generated, allowing the gel to dry and shrink to a similar shape. In particular, from the viewpoint of increasing uniformity in concentration of the first solvent contained in an atmosphere in the vicinity of the gel 12 and thus further increasing homogeneity in the pore structure of the gel 12, the gel 12 held in the casting pan 3 is preferably oscillated in a horizontal oscillating direction parallel to the bottom surface 31 of the casting pan 3 while adjusting the concentration of the first solvent contained in the atmosphere in the reaction chamber 2 to the above-described range.

An amount of the first solvent to be used in the solvent washing and replacement step S3 depends on a temperature or a device (the reaction chamber 2 or the casting pan 3) for solvent displacement, and an amount that allows the gel 12 to be entirely immersed in the first liquid phase L1 in the casting pan 3 is preferably used. Therefore, the amount of the first solvent is preferably in a range of 2 to 100 times a total volume of the gel 12. Solvent displacement in the solvent washing and replacement step S3 is not limited to once, and may be performed a plurality of times. A specific method of solvent displacement in the solvent washing and replacement step S3 may be any of full replacement, partial replacement, or circulation replacement.

In particular, when a solvent exchange is performed multiple times, a type of an organic solvent, a temperature, or a treatment time may be independently set for each time. Here, the solvent to be used in a last solvent displacement in the solvent washing and replacement step S3 represents a first solvent constituting the below-described first liquid phase L1.

Note that, a material and/or a degradation product of the material to be used in the solvent washing and replacement step S3 may be mixed in the resulting aerogel as an unavoidable component.

### [Drying step S4]

A drying step S4 is a step in which a second solvent having a specific gravity higher than that of the first solvent and being phase-separated from the first solvent is dried in the casting pan 3 in which the second solvent has been supplied to form an aerogel containing Si. The drying step S4 can include performing at least the following steps: a first step S41, a second step S42, and a third step S43 on a gel after the solvent washing and replacement step S3, which is placed in the casting pan 3 containing the first liquid phase L1 composed of the first solvent.
1) The first step S41 is a step of supplying a second solvent having a specific gravity higher than that of the first solvent and being phase separated from the first solvent to the reaction chamber 2 in which the casting pan 3 is placed.
2) The second step S42 is a step of removing the first solvent constituting the first liquid phase L1 from the reaction chamber 2.
3) The third step S43 is a step of drying the gel 12 at a low temperature until the gel 12 floats to an interface of the second liquid phase L2.

Here, the drying step S4 is preferably performed with a vapor concentration of the solvent contained in the atmosphere in the reaction chamber 2 being adjusted to a range of 70% or more and less than 100% and further preferably to a range of 90% or more and less than 100% of a saturated vapor pressure. More specifically, among the third step S43 and the fourth step S44 in the drying step S4, at least the third step S43 is preferably performed with a total vapor concentration of the first solvent and the second solvent contained in the atmosphere in the reaction chamber 2 being adjusted to the above-described range. This allows evaporation of the first solvent and the second solvent from the first liquid phase L1, the second liquid phase L2, or the gel 12 to be properly controlled, thereby suppressing breakage of the gel 12 due to rapid evaporation of the solvent contained in the gel 12.

In the drying step S4, the gel 12 held in the casting pan 3 is preferably oscillated in the horizontal oscillating direction parallel to the bottom surface 31 of the casting pan 3. More specifically, in at least the third step S43 among the third step S43 and the fourth step S44 in the drying step S4, the gel 12 held in the casting pan 3 is preferably oscillated in the horizontal oscillating direction parallel to the bottom surface 31 of the casting pan 3. This increases uniformity in temperature of the gel 12, as well as uniformity in temperature distribution, vapor concentration distribution, or flow velocity distribution in an atmosphere within the reaction chamber 2. Thus, uniformity in evaporation velocity of the first solvent or the second solvent from the first liquid phase L1, the second liquid phase L2, or the gel 12 can be increased. As a result, when the internal solvent in the gel 12 is discharged to the outside of the gel, uniformity in pore structure (pore size) is increased, and thus, capillary forces are almost uniformly generated, allowing the gel to dry and shrink to a similar shape. Homogeneity of the resulting aerogel 1 can also be increased when the pore structure is swelled by springback, because uniformity of the pore structure (pore size) is increased due to increased uniformity of a migration velocity of solvent vapor in pores. Here, from the viewpoint of also increasing uniformity in vapor concentration of the solvent contained in an atmosphere in the vicinity of the gel 12 and thus further increasing homogeneity in the resulting aerogel 1, the gel 12 held in the casting pan 3 is preferably oscillated in the horizontal oscillating direction parallel to the bottom surface 31 of the casting pan 3 while adjusting the vapor concentration of the solvent contained in the atmosphere in the reaction chamber 2 to the above-described range.

The drying step S4 is preferably performed under an atmosphere in the reaction chamber 2 adjusted to atmospheric pressure. This allows drying of the gel 12 without applying pressure to enable the aerogel 1 to be produced with a simpler device than a conventional drying step using a supercritical fluid, thereby reducing a production cost of the aerogel 1.

### (First step S41)

A first step S41 is a step of supplying a second solvent having a specific gravity higher than that of the first solvent and being phase separated from the first solvent to the casting pan 3. This allows the gel 12 to be located in a liquid phase system with the first liquid phase L1 and the second liquid phase L2.

Here, the first solvent constituting the first liquid phase L1 and the second solvent constituting the second liquid phase L2 are selected from solvents that are not completely mixed with each other or separated into two phases. As the second solvent, a solvent having a specific gravity higher than that of the first solvent is selected, thereby forming a liquid phase system in which the first liquid phase L1 is located above and the second liquid phase L2 is located below.

Furthermore, a solvent having a boiling point higher than that of the first solvent is preferably used as the second solvent, but the second solvent is not particularly limited thereto as long as the first liquid phase L1 evaporates first at the below-described first temperature to create a state in which the gel 12 is immersed in the second liquid phase L2.

The second solvent to be used in the first step S41 is preferably a solvent that is not completely mixed with the first solvent, can be phase-separated in the first liquid phase L1 and the second liquid phase L2, and has a boiling point higher than that of the first solvent. Examples thereof include water (specific gravity 1.0, boiling point 100°C), a silicone oil (specific gravity 0.94 to 0.98, boiling point 150°C or higher), a fluorinated solvent (specific gravity 1.3 to 1.5, boiling point 98 to 150°C), mercury (specific gravity 13, boiling point 356°C), etc.

An amount of the second solvent to be used in the first step S41 is preferably an amount that allows all the gels 12 held in the casting pans 3 to be immersed in the second liquid phase L2. This allows an interface between the first liquid phase L1 and the second liquid phase L2 to be located above the gel 12 held in the casting pan 3, as shown in FIG. 4(a), so the first solvent constituting the first liquid phase L1 can be easily removed.

### (Second step S42)

A second step S42 is a step of removing the first solvent constituting the first liquid phase L1 from the reaction chamber 2. This causes the first liquid phase L1 to disappear and only the second solvent is present in the plurality of casting pans 3.

Here, the first solvent is preferably discharged to the outside of the reaction chamber 2 in a liquid state. This allows the first solvent to be quickly discharged to the outside of the reaction chamber 2.

On the other hand, the first solvent may be evaporated at a temperature higher than room temperature and thus be discharged to the outside of the reaction chamber 2 in a gaseous state. The temperature is preferably in a range of 30°C to 50°C. Note that, it is not preferred to set the temperature to a temperature equal to or higher than a boiling point of the first solvent, because boiling of the first solvent causes the gel 12 to break.

The second step S42 preferably also removes an excess second solvent in addition to the first solvent constituting the first liquid phase L1 from the reaction chamber 2. In particular, from the viewpoint of quickly discharging the first solvent and the second solvent outside the reaction chamber 2, the first solvent is discharged to the outside of the reaction chamber 2 in a liquid state together with the excess second solvent. Since the first solvent having a low specific gravity remains inside the pores of the gel 12, the second solvent is present in the plurality of casting pans 3 and the gel 12 in the casting pans 3 is partially immersed in the second liquid phase L2 and floats on the second liquid phase L2 as shown in FIG. 4(b). At this time, it is also observed that the gel 12 is shrunk in the second liquid phase L2. By keeping the gel 12 floating on the second liquid phase L2, friction between the gel and a substrate can be reduced to almost zero during shrinkage of the gel in the second step S42 or restoration of volume in a third step S43 or a fourth step S44 as described below.

### (Third step S43)

A third step S43 is a step of drying the gel 12 at a low temperature until the gel 12 floats to an interface of the second liquid phase L2. The gel 12 before the third step S43 is located in the second liquid phase L2, but the gel 1, which has been shrunk in the second step S42 restores its volume by swelling of the pore structure due to springback. Thus, an aerogel 1 with a desired high homogeneity can be obtained.

An atmospheric temperature in the third step S43 is preferably in a range of 30°C to 60°C. By holding the gel 12 in this temperature range, the second solvent remaining within the gel 12 evaporates to dry the gel 12, which decreases a specific gravity of the gel 12. As a result, the gel 12 moves upward from a liquid surface of the second liquid phase L2, and finally, as shown in FIG. 4(c), a dry aerogel 1 floating on the second liquid phase L2 can be obtained. Note that, it is not preferred to set the temperature to a temperature equal to or higher than a boiling point of the second solvent, because boiling of the second solvent causes the gel 12 to break.

The third step S43 preferably continues until volume restoration of the gel 12 by springback reaches a steady state.

### (Fourth step S44)

After the third step S43, the aerogel 1 is preferably removed from the liquid phase system and further dried in a fourth step S44. Transparency of the aerogel 1 can be further increased by further performing the fourth step S44.

Here, drying conditions of the aerogel 1 are not particularly limited, and, for example, it may be dried naturally in the air. Among these, from the viewpoint of further increasing transparency of the aerogel 1, the aerogel is preferably dried at a high temperature, i.e., a second temperature higher than the first temperature.

When the aerogel 1 is dried at the high temperature of the second temperature, the second temperature is preferably in a range of 50°C to 250°C. For drying conditions at the high temperature, the second temperature may be set in a range of 50°C to 100°C and a drying time may be set in a range of 5 hours to 10 hours. Alternatively, the second temperature may be set in a range of 150°C to 250°C and the drying time may be set in a range of 10 minutes to 90 minutes.

### [Other steps]

Although a method for producing an aerogel in a plate (or cuboid) shape has been described above, the present invention is not limited thereto and may include processing the plate-shaped aerogel into a desired shape as an optional step. For example, the plate-shaped aerogel may be processed into various shapes such as a film, a cube, a sphere, a cylinder, a pyramid, a cone, etc., as well as a plate having a different shape. For a means for processing the aerogel, known machining means such as wire cutting or laser cutting may be used.

Furthermore, the aerogel 1 of the present invention may include processing a bulk aerogel such as a plate-shaped aerogel into a granular aerogel as an optional step. For a means for processing into the granular aerogel, a known mill (crusher) such as a jaw crusher, a roll crusher, a ball mill, etc., may be used.

### [Configuration of aerogel production device]

A device for producing the aerogel 1 of the present invention is suitably used in the above-described production method, and, as schematically shown in FIG. 5, includes a casting pan 3 for curing a sol 11 through a cross-linking reaction to form a gel 12, the sol being produced by adding a silicon compound to an aqueous solution to thereby hydrolyze the silicon compound; a casting unit 4 for charging the sol 11 into the casting pan 3; a first solvent supplying unit 5 for washing and replacing an internal solvent present on a surface of and within the gel 12 with a first solvent L10 having a low surface tension of 45 mN/m or less at 20°C by supplying the first solvent into the casting pan 3 in which the gel 12 has been formed; a second solvent supplying unit 6 for supplying a second solvent L20 having a specific gravity higher than that of the first solvent L10 and being phase-separated from the first solvent L10 into the casting pan 3; a drying unit 7 for drying the second solvent L20 having been supplied to the casting pan 3 to form an aerogel containing Si; and an oscillating mechanism 8 for oscillating the sol 11 or the gel 12 formed in the casting pan 3 in a horizontal oscillation direction parallel to a bottom surface of the casting pan 3 while the sol or the gel is held in the casting pan. This enables production of an aerogel with a high yield and a sound state without a defect such as a crack, even if it has a relatively large area (specifically, a size of a surface including a surface region in a shape of a square having dimensions of at least 300 mm on each of four sides) since an aerogel having a standard deviation of a total light transmittance when irradiated with visible light having a wavelength of 550 nm of 0.60% or less on a 10 mm thickness basis can be obtained as the aerogel 1.

Here, piping with a valve (not shown) can be used as the casting unit 4, the first solvent supplying unit 5, and the second solvent supplying unit 6.

The drying unit 7 may include at least a draining unit 71 for removing the first solvent constituting the first liquid phase L1 as a draining liquid L3 from the reaction chamber 2, the unit being used to perform the second step S42 of the drying step S4 described above, and a temperature adjustment unit 72 for adjusting an atmospheric temperature in the reaction chamber 2 until the gel 12 floats to an interface of the second liquid phase L2, the unit being used to perform the third step S43 of the drying step S4.

The oscillating mechanism 8 may be a mechanism that oscillates the reaction chamber 2 in a horizontal oscillating direction parallel to a bottom surface of the casting pan 3, especially in an aspect in which the reaction chamber 2 is rotated along a rotation axis M as shown in FIG. 5, a known driving means such as a motor can be used.

### [Application of aerogel]

For such advantages, the aerogel 1 of the present embodiment can be preferably used in an application as a heat insulating material in a cryogenic container, a space field, an architecture field, an automotive field, a household appliance field, a semiconductor field, an industrial facility field, etc. The aerogel 1 of the present embodiment can also be utilized for repelling water, absorbing sound, damping, carrying a catalyst, etc., in addition to the application as the heat insulating material.

### EXAMPLES

Next, in order to further clarify the effects of the present invention, inventive examples and comparative examples will be described, but the present invention is not limited to the inventive examples.

### <Inventive example>

### [Sol production step S1]

First, 3.28 g of a non-ionic surfactant serving as a surfactant (PLURONIC PE10500, manufactured by BASF) was dissolved in 28.96 g of a 0.005 mol/L acetic acid aqueous solution, and then 4.00 g of urea (manufactured by NACALAI TESQUE, INC.) serving as a compound generating a basic catalyst was added thereto to dissolve. To the resulting aqueous solution, 10.00 g of a silicon compound was added serving as a main raw material, followed by stirring and mixing at room temperature for 60 minutes to thereby hydrolyze the silicon compound. Thus, a sol 11 was produced.

As the silicon compound, tetramethoxysilane, a tetrafunctional silane compound (methyl orthosilicate, manufactured by TAMA CHEMICALS CO., LTD., hereinafter may be abbreviated as "TMOS"); methyltrimethoxysilane, a trifunctional silane compound (DOWSIL Z-6366 Silane, manufactured by Dow Corning Toray Co., Ltd., hereinafter may be abbreviated as "MTMS"); and dimethyldimethoxysilane, a bifunctional silane compound (product code: D1052, manufactured by Tokyo Chemical Industry Co., Ltd., hereinafter may be abbreviated as "DMDMS") were used and added in a ratio of 25% by mass of the tetrafunctional silane compound, 65% by mass of the trifunctional silane compound, and 10% by mass of the bifunctional silane compound. Noted that, both the TMOS and the MTMS were purified with vacuum distillation prior to use.

### [Gelation step S2]

Then, as a casting step S22, 1225 mL of the resulting sol 11 was charged into a casting pan 3, which had a planar shape of 320 mm square and a height of 17.5 mm, to a depth of 10 mm, and the casting pan 3 in which sol 11 had been charged was placed in the casting pan holder 30.

The subsequent steps, i.e., from the gelation step S2 to a drying step S4 were performed in the same reaction chamber 2. As shown in FIG. 5, the casting pan 3 (or a casting pan holder 30 in which the casting pan 3 had been held) was placed in the reaction chamber 2 so that a surface of the sol 11 or a gel 12 (bottom surface of the casting pan 3) was horizontal, and the reaction chamber 2 was configured to be rotated around an axis (center axis M) in a height direction Y of the reaction chamber 2, so that the casting pan 3 in which the sol 11 or the gel 12 had been held could be oscillated in a horizontal oscillating direction along the bottom surface 31 of the casting pan 3. Water was poured below the casting pan 3 in the reaction chamber 2 so that a concentration of water vapor in an atmosphere in the reaction chamber 2 was equal to a saturated water vapor pressure.

The sol 11 that had been charged into the casting pan 3 was left to stand at 60°C for 10 hours as a curing step S23 and heated to produce a basic catalyst, thereby turning the sol into a gel. Thereafter, a layer of water having a thickness of 7.5 mm was formed on a top surface of the gel 12 by supplying warm water at 60°C in the reaction chamber 2 and immediately discharging it. Then, the reaction chamber 2 was heated to 80°C and left to stand for 72 hours to age the gel. At this time, an oscillating mechanism 8 was activated to repeatedly rotate the reaction chamber 2 around the central axis M alternately clockwise up to a rotation angle of 90°for 20 seconds and counterclockwise up to a rotation angle of 90° for 20 seconds, so that the casting pan 3 in which the sol 11 before gelation or the gel 12 after gelation had been held was oscillated in a horizontal oscillating direction.

After the curing step S23, the rotation of the reaction chamber 2 was stopped to stop the oscillation of the casting pan 3, and the temperature in the reaction chamber 2 was lowered to 60°C. Next, the reaction chamber 2 was filled with methanol (MeOH) at 60°C in an amount equivalent to five times a volume of the gel (about 6.2 L) to immerse the casting pan 3 in which the gel had been formed in the methanol, and this state was kept for 8 hours. Thereafter, the washing treatment S24, in which methanol that had not been held in the casting pan 3 was discharged, was repeated five times to wash a surfactant, an acid, a reaction byproduct, etc., contained in the gel. At this time, an oscillating mechanism 8 was activated to repeatedly rotate the reaction chamber 2 around the central axis M alternately clockwise up to a rotation angle of 90°for 20 seconds and counterclockwise up to a rotation angle of 90° for 20 seconds, so that the casting pan 3 in which the sol 11 before gelation or the gel 12 after gelation had been held was oscillated in a horizontal oscillating direction. Note that, the methanol used in the washing treatment S24 was manufactured by NACALAI TESQUE, INC.

### [Solvent washing and replacement step S3]

Next, isopropanol and heptane were used as first solvents in this order in a solvent washing and replacement step S3. More specifically, isopropanol was supplied as the first solvent in the casting pan 3 in which the gel 12 had been formed and an internal solvent present on a surface of and within the gel 12 was washed and replaced with isopropanol. Then, heptane was supplied as the first solvent in the casting pan 3 and a solvent such as isopropanol present on a surface of and within the gel 12 was washed and replaced with heptane. Such a treatment was repeated twice. Here, the first solvent was supplied to the casting pan 3 by supplying an amount (about 6.2 L) equivalent to five times a volume of the gel into the reaction chamber 2 in which the gel 12 and the casting pan 3 had been placed under a condition of 60°C, so that a plurality of the casting pans 3 in the reaction chamber 2 were immersed in a first liquid phase L1 composed of the first solvent as shown in FIG. 3(c) and kept them in that state for 8 hours. At this time, an oscillating mechanism 8 was activated to repeatedly rotate the reaction chamber 2 around the central axis M alternately clockwise up to a rotation angle of 90°for 20 seconds and counterclockwise up to a rotation angle of 90° for 20 seconds, so that the casting pan 3 in which the sol 11 before gelation or the gel 12 after gelation had been held was oscillated in a horizontal oscillating direction. The first liquid phase L1 that was not held in the casting pan 3 in the reaction chamber 2 was then discharged, as shown in FIG. 3(d). After the solvent washing and replacement step S3, the gel 12 in the casting pan 3 was immersed in the first liquid phase L1 composed of heptane and became submerged in the first liquid phase L1.

### [Drying step S4]

After the solvent washing and replacement step S3, the reaction chamber 2 was cooled to 40°C. Next, as a first step S41 of a drying step S4, water serving as a second solvent was supplied in the casting pan 3. Here, the water was supplied to the casting pan 3 by supplying water at 40°C in an amount equivalent to five times a volume of the gel into the reaction chamber 2 in which the gel 12 and the casting pan 3 had been placed, so that a plurality of the casting pans 3 in the reaction chamber 2 was immersed in a second liquid phase L2 composed of water to form a liquid phase system in which heptane (forming the first liquid phase L1 located on an upper side) and water (forming the second liquid phase L2 located on a lower side) are separated into two liquid phases at an interface above the gel 12, as shown in FIG. 4(a).

Immediately after the first step S41, heptane and excess water in the reaction chamber 2 were discharged as a second step S42. At this time, as shown in FIG. 4(b), the gel 12 in the casting pan 3 was partially immersed in the second liquid phase L2 which contained heptane inside pores and was composed of water, and floated on the second liquid phase L2.

After the second step S42, an atmospheric temperature in the reaction chamber 2 was maintained at 40°C to dry the gel 12 at a low temperature as a third step S43. More specifically, the gel 12 was dried by continuously exhausting a gas in the reaction chamber 2 at an exhaust velocity of 500 mL/min by an exhaust device, collecting heptane vapor contained in an exhaust gas by a condenser, and then returning a dry gas that had been heated to 40°C to the reaction chamber 2. At this time, an open upper surface of a container was covered with a sheet of cellulosic filter paper (filter paper, manufactured by WATT MANN CO,. LTD., grade 1, particle holding capability: 11 µm) serving as a breathable film, and a total vapor concentration of the first solvent and the second solvent in a space divided by a liquid surface of heptane and a breathable film was adjusted so as to be about 50%. In the third step S43 of the drying step S4, an oscillating mechanism 8 was activated to repeatedly rotate the reaction chamber 2 around the central axis M alternately clockwise up to a rotation angle of 90°for 20 seconds and counterclockwise up to a rotation angle of 90° for 20 seconds, so that the casting pan 3 in which the sol 11 before gelation or the gel 12 after gelation had been held was oscillated in a horizontal oscillating direction.

The drying of the gel 12 at a low temperature in the third step S43 was performed until the thus-dried gel 12 floated to a liquid surface of the second liquid phase L2, and a drying time was about 45 hours. This resulted in a translucent aerogel.

The aerogel after the third step S43 was further dried in a fourth step S44 in an additional incubator (IS601 manufactured by Yamato Scientific Co., Ltd.) at a drying temperature of 80°C until a size of the aerogel recovered to 95% of a size of the casting pan 3 (304 mm square) to thereby obtain an aerogel 1 of the present invention.

These operations were repeated 26 times to obtain a total of 27 aerogels 1. These 27 aerogels 1 included variations in which a type or an amount of the surfactant in the sol production step S1, a proportion of TMOS, MTMS, or DMDMS in the silicon compound, an aging time in the gelation step S2, a temperature, time, a number of cycles, or an oscillation velocity in the solvent washing and replacement step S3, or a temperature, an exhaust velocity, or an oscillation velocity in the drying step S4 was changed.

### <Comparative Example>

The sol 11 was charged into the casting pan 3 and placed in the casting pan holder 30. In this example, a comparative aerogel (comparative example) was obtained in the same manner as in the inventive example, except that the casting pan 3 in which the sol 11 and gel 12 were held was not subjected to oscillation by rotation of the reaction chamber 2 in the gelation step S2, the solvent washing and replacement step S3, or the drying step S4. This operation was repeated seven times to obtain a total of eight aerogels 1.

### <Evaluation>

### (Observation of crack occurrence in aerogel)

The resulting aerogels of the inventive example and the comparative example were visually observed. As a result, for all 27 aerogels obtained in the inventive example, the aerogels were obtained as crack-free areas on entire surfaces. On the other hand, the aerogels obtained in the comparative example had breakages in all eight aerogels, in other words, an aerogel from which a surface region of 300 mm square was capable of being taken was not able to be obtained. Therefore, the aerogel obtained in the inventive example was an aerogel that had a higher yield than that of the aerogel of the comparative example and a sound condition without a defect such as a crack.

### (Measurement of transmittance of aerogel)

Transmittance of the obtained aerogel was determined based on spectral data obtained using a V-670 UV-Vis-NIR spectrophotometer equipped with an integrating sphere (manufactured by JASCO Corporation (Japan)). A value of total transmittance when three positions: a center position of a square, a corner position of a square, and a center position of a side of a square (a center position of a side connecting adjacent corners of a square) within a surface region of 300 mm square at a position overlapping a center (center of gravity) of the aerogel were irradiated with visible light having a wavelength of 550 nm was converted to a total transmittance (T₅₅₀) on a 10 mm thick sample using the Lambert-Beer's formula, respectively. The center position of the square was defined as a position within a region of 50 mm square having the same center as the square of the surface region. The corner position of the square was defined as a position within a region of 50 mm square having the same corners as the corners of the square of the surface region and overlapping with the square of the surface region. The center position of a side of the square was defined as a position within a region of 50 mm square where the center position of a side connecting adjacent corners of the square is the same as the square of the surface region and overlaps with the square of the surface region. A thickness of the sample was determined as a thickness of the sample at each of measurement positions after the total transmittance was measured as measured using a caliper. From a value of the total transmittance determined for each position in the aerogel, a standard deviation of total light transmission at the three positions for each aerogel was determined, and an average of the thus-determined standard deviation was used as a result of the standard deviation.

As a result, as shown in Fig. 6, a standard deviation of a total light transmittance when irradiated with visible light having a wavelength of 550 nm (standard deviation of the above-mentioned three positions) of the aerogel of the inventive example was around 0.30%, whereas a standard deviation of a total light transmittance of the comparative aerogel when irradiated with visible light having a wavelength of 550 nm was around 1.00%.

Therefore, the aerogel of the inventive example demonstrates that a larger-sized aerogel without a crack was obtained. This also revealed that the aerogel with a small standard deviation of the total light transmittance when irradiated with visible light having a wavelength of 550 nm can suppress occurrence of a crack.

### <Comprehensive Evaluation>

The aerogel of the inventive example has a small standard deviation of a total light transmittance when irradiated with visible light having a wavelength of 550 nm, and it is revealed that an aerogel with a high yield and a sound state without a defect such as a crack can be obtained in this case. Furthermore, the aerogel of the inventive example having a small standard deviation of a total light transmittance when irradiated with visible light having a wavelength of 550 nm can be obtained by applying the production method of the present invention in which the casting pan 3 in which the sol 11 or the gel 12 is held is oscillated during one or both of the gelation step S2 and the drying step S4.

### EXPLANATION OF REFERENCE NUMERALS

1 Aerogel
10 Aerogel production device
11 Sol
12 Gel (wet gel)
2 Reaction chamber
3 Casting pan
30 Casting pan holder
31 Bottom surface of casting pan
4 Casting unit
5 First solvent supplying unit
6 Second solvent supplying unit
71 Discharging unit
72 Temperature adjusting unit
8 Oscillating mechanism
S1 Sol production step
S2 Gelation step
S21 Catalyst addition step
S22 Casting step
S23 Curing step
S3 Solvent washing and replacement step
S4 Drying step
S41 First step
S42 Second step
S43 Third step
L1 First liquid phase
L10 First solvent
L2 Second liquid phase
L20 Second solvent

## Claims

1. An aerogel having a pore structure formed by a fibrous skeleton continuous in a mesh form and a plurality of pores defined by the skeleton, the aerogel comprising Si,
the aerogel having a surface comprising a surface region in a shape of a square having dimensions of at least 300 mm on each of four sides, and
the aerogel having a standard deviation of a total light transmittance when the surface region is irradiated with visible light having a wavelength of 550 nm of 0.60% or less on a 10 mm thickness basis.

2. The aerogel according to claim 1, wherein the total light transmittance when irradiated with visible light is 50% or more on a 10 mm thickness basis.

3. The aerogel according to claim 1 or 2, wherein the aerogel is produced by drying at atmospheric pressure.

4. A method for producing an aerogel, the method comprising:
producing a sol by adding a silicon compound to an aqueous solution to thereby hydrolyze the silicon compound;
gelling the sol by charging the sol into a casting pan and curing the sol through a cross-linking reaction in the casting pan to produce a gel;
washing and replacing an internal solvent present on a surface of and within the gel with a first solvent having a low surface tension of 45 mN/m or less at 20°C by supplying the first solvent into the casting pan; and
drying a second solvent having a specific gravity higher than that of the first solvent and being phase-separated from the first solvent in the casting pan in which the second solvent has been supplied to produce an aerogel containing Si,
at least one of the gelling, the washing and replacing, or the drying being performed with oscillating the sol or the gel produced in the casting pan in a horizontal oscillation direction parallel to a bottom surface of the casting pan while the sol or the gel is held in the casting pan.

5. The method for producing an aerogel according to claim 4, wherein the gelling, the washing and replacing, and the drying are performed in a same reaction chamber.

6. The method for producing an aerogel according to claim 4, wherein at least the gelling and the drying among the gelling, the washing and replacing, and the drying are performed in separate reaction chambers.

7. The method for producing an aerogel according to claim 5 or 6, wherein the gelling is performed by adjusting a concentration of water vapor comprised in an atmosphere in the reaction chamber to a range of 60% or more and 100% or less of a saturated water vapor pressure.

8. The method for producing an aerogel according to claim 5 or 6, wherein the drying is performed by adjusting a vapor concentration of a solvent comprised in an atmosphere in the reaction chamber to a range of 70% or more and less than 100%.

9. The method for producing an aerogel according to claim 5 or 6, wherein the drying is performed under an atmosphere in the reaction chamber adjusted to atmospheric pressure.

10. A device for producing an aerogel, the device comprising:
a casting pan for curing and gelling a sol through a cross-linking reaction of the sol to produce a gel, the sol being produced by adding a silicon compound to an aqueous solution to thereby hydrolyze the silicon compound;
a casting unit for charging the sol into the casting pan;
a first solvent supplying unit for washing and replacing an internal solvent present on a surface of and within the gel with a first solvent having a low surface tension of 45 mN/m or less at 20°C by supplying the first solvent into the casting pan;
a second solvent supplying unit for supplying, into the casting pan, a second solvent having a specific gravity higher than that of the first solvent and being phase-separated from the first solvent;
a drying unit for drying the second solvent having been supplied to the casting pan to produce an aerogel containing Si; and
an oscillating mechanism for oscillating the sol or the gel formed in the casting pan in a horizontal oscillation direction parallel to a bottom surface of the casting pan while the sol or the gel is held in the casting pan.
